# FASCICULE DE BREVET EUROPEEN

(11) **EP 1 996 832 B1**
(45) Date de publication et mention de la délivrance du brevet: **12.05.2010**
(21) Numéro de dépôt: 07731076.1
(22) Date de dépôt: 02.03.2007
(51) Int. Cl.: F16G 15/02

(54) **CROCHET DE LEVAGE AVEC REDUCTEUR DE LONGUEUR DE CHAINE**
HUBHAKEN MIT KETTENLÄNGENREDUZIERER
LIFTING HOOK WITH CHAIN LENGTH REDUCER

(30) Priorité: 06.03.2006 FR 0602048
(43) Date de publication de la demande: 03.12.2008
(73) Titulaire: Forges de l'Eminée, S.A.S., 63250 Celles sur Durolle (FR)
(72) Inventeur: HENRION, Blaise, F-37550 Saint-Avertin (FR)
(74) Mandataire: Oudin, Stéphane
(86) Numéro de dépôt international: PCT/FR2007/000377
(87) Numéro de publication internationale: WO 2007/101930

(56) Documents cités:
- WO-A-2004/087554
- DE-A1- 3 615 435
- DE-A1- 10 314 291
- DE-C1- 19 636 544
- DE-U1- 20 205 316
- FR-A3- 2 855 580

## Description

La présente invention est relative à un crochet de levage de charge, utilisable notamment pour soulever des charges telles que des grosses pièces métalliques, des moteurs, des machines, etc.

Les crochets de levage sont couramment utilisés pour soulever des pièces ayant une masse importante atteignant plusieurs centaines de kilogrammes, voire plusieurs tonnes. Ces pièces sont généralement déplacées au moyen d'un pont roulant qui comprend un dispositif de levage constitué d'une chaîne de traction et d'un treuil motorisé permettant de monter et descendre la chaîne afin de soulever la pièce, et de pouvoir la déplacer. La chaîne est accouplée avec le crochet qui s'accroche par exemple sur un anneau de levage fixé sur la pièce, permettant de la saisir.

Il est connu d'utiliser des dispositifs de réduction de la longueur de la chaîne pour tendre celle-ci au mieux avant de la soumettre à un effort de traction en soulevant la charge. Ainsi on évite les chocs brutaux sur le crochet, sur la chaîne et sur le treuil motorisé, dus à la vitesse d'enroulement de la chaîne sur le tambour du treuil qui s'effectue à vide puis, soudainement, sous la charge de la pièce. Ces réducteurs permettent également de rattraper les jeux sur les chaînes qui sont attachées sur une pièce au moyen de plusieurs crochets accrochés à différentes hauteurs et positions sur ladite pièce. Le rattrapage des jeux permet ainsi d'équilibrer la charge dès son soulèvement, ce qui permet de la conserver en position stable.

L'Homme du Métier peut se référer aux brevetsantérieurs suivants qui font référence à des réducteurs de longueur de chaîne : WO 0221014 ; GB 2088520 ; GB 2127129 ; WO 9723406 ; JP 1236195 ; WO 04087553 ; WO 04087554 ; DE 20205316U.

Le réducteur peut soit être en liaison directe avec le crochet, au moyen d'une articulation, soit être en liaison indirecte avec le crochet, positionné à proximité de celui sur la chaîne. Il est constitué d'une pièce plane ou courbée avec une concavité, ladite pièce présentant un orifice dont la forme approximative est celle d'une croix plane ou incurvée dans la partie concave. Les dimensions de l'orifice permettent le passage des maillons de la chaîne pour la faire translater et régler sa longueur, puis le blocage d'un ou de plusieurs desdits maillons sur le contour supérieur et/ou sur le contour inférieur de l'orifice en croix, en prenant appui sur la forme plane ou concave de la pièce, lorsque ladite chaîne est soumise à une traction en soulevant l'objet.

L'un des inconvénients des réducteurs est qu'il subsiste, suite au réglage de la longueur de la chaîne au moyen dudit réducteur, un léger jeu sur la chaîne engagée dans le réducteur, tant que celle-ci n'est pas complètement tendue sous l'action de la charge. Les maillons de la chaîne peuvent alors se déplacer dans l'orifice en croix du réducteur et mal se positionner, ce qui peut entraîner la translation de plusieurs maillons de la chaîne au travers de l'orifice avant son blocage dans le réducteur lorsque le treuil motorisé est actionné, et par exemple engendrer un changement de la longueur de la chaîne et donc un déséquilibre de la charge lorsqu'elle est soulevée.

Pour cela, certains réducteurs, comme ceux décrits dans les brevets WO 0221014, GB 2088520 et GB 2127129 prévoient des moyens d'obturation de l'orifice constitués d'un axe transversal qui coulisse et bouche partiellement l'intérieur de l'orifice en croix pour empêcher le déplacement du maillon de la chaîne positionné dans ledit orifice, et éviter ainsi que celui-ci se désengage et translate au travers du réducteur, ce qui permet de préserver la longueur de la chaîne telle que réglée. Cet axe présente pour inconvénient d'être difficilement manipulable pour sa mise en place ou son retrait. En effet, l'utilisateur, qui manipule le crochet ou le réducteur pour régler la longueur de la chaîne ou retirer celle-ci, doit à la fois maintenir le crochet ou le réducteur, coulisser l'axe pour dégager l'orifice partiellement bouché et régler la chaîne ; ledit axe étant généralement monté sur ressort pour garantir l'obturation de l'orifice en permanence dès qu'il n'est pas manipulé. De plus, l'utilisateur est obligé de manipuler le crochet avec des gants de protection pour respecter des exigences de sécurité, ce qui réduit la maniabilité du réducteur et de l'axe lors du réglage de la longueur de la chaîne.

De même, un autre réducteur, comme celui décrit dans le modèle d'utilité allemand DE 20205316, propose d'obturer l'orifice et par conséquent d'empêcher le retrait du maillon de la chaîne de la fente de blocage située au-dessus de l'orifice. Cette obturation est obtenue par un doigt pivotant, muni d'un ressort de rappel qui assure en permanence ladite obturation. L'utilisateur doit, pour régler la longueur de la chaîne ou la retirer, simultanément agir sur la chaîne et maintenir le doigt en position ouverte. Toutefois, compte tenu de la position et des dimensions du doigt pivotant, le port obligatoire de gants de protection rend cette manipulation délicate.

Le but de la présente invention est de pallier cet inconvénient en proposant un crochet muni d'un réducteur de longueur de chaîne qui dispose de moyens d'obturation de l'orifice en croix, facilement manipulables par simple préhension du crochet pour permettre un réglage manuel très aisé et préserver ce réglage tant que la chaîne n'est pas complètement tendue, c'est-à-dire tant que la chaîne ne soulève pas la charge.

Elle a également pour but de garantir un parfait positionnement des maillons de la chaîne dans l'orifice en croix lors de l'accrochage du crochet sur la charge.

A cet effet, l'invention concerne un crochet de levage, utilisable pour lever des charges au moyen d'un dispositif de levage, comprenant une partie en forme de crochet qui s'accroche sur la charge à soulever et un réducteur de longueur de chaîne, ledit réducteur étant solidaire de l'extrémité supérieure du crochet et s'accouplant avec une chaîne par blocage d'un de ses maillons dans le réducteur, ledit réducteur comprenant d'une part une concavité et un orifice dont les dimensions permettent le passage des maillons de la chaîne au travers dudit orifice, puis le blocage d'un desdits maillons positionné en appui sur le contour supérieur de l'orifice, dans la concavité, lorsque ladite chaîne est tendue, et d'autre part des moyens d'obturation partielle de l'orifice et une face externe, lesdits moyens d'obturation étant situés en appui sur la face, lesdits moyens d'obturation étant articulés pour être dégagés manuellement par simple pression pour permettre le réglage de la longueur de la chaîne, remarquable en ce que le réducteur comprend un doigt de fermeture de la partie en forme de crochet pour empêcher le décrochage de la charge, et en ce que les moyens d'obturation comprennent des moyens autobloquants qui maintiennent le doigt de fermeture en position verrouillée sur la partie du crochet tant que les moyens d'obturation sont dégagés de l'orifice et qu'ils ne sont pas repositionnés en appui sur la face externe.

D'autres avantages et caractéristiques de la présente invention ressortiront mieux de la description ci-dessous qui est donnée à titre d'exemple non limitatif, en référence aux dessins parmi lesquels :
- la figure 1 représente une vue de face du crochet de levage selon l'invention,
- la figure 2 représente une vue de profil du crochet de levage selon l'invention,
- la figure 3 représente une vue du réducteur.

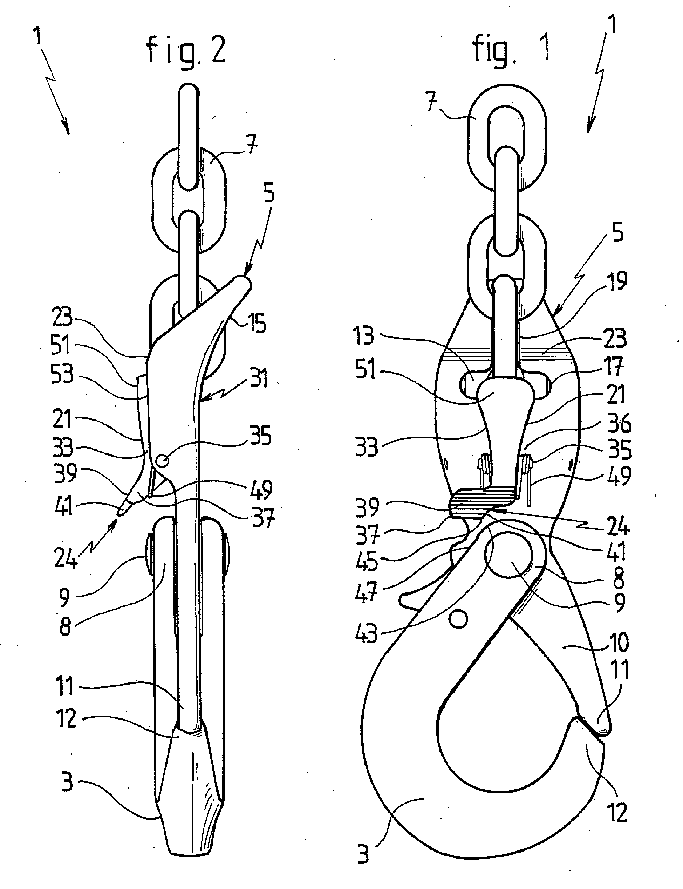

Le crochet 1 de levage, selon l'invention, est utilisable notamment pour soulever et déplacer des charges au moyen d'un dispositif de levage tel qu'un pont roulant. Il se compose, selon un mode préférentiel et non limitatif représenté sur les figures 1 et 2, d'une partie 3 en forme de crochet qui est destinée à s'accrocher sur la charge, soit directement soit au moyen d'un anneau intermédiaire de levage fixé sur la charge à soulever (non représenté sur les figures).

Le crochet 1 comprend un réducteur 5 de longueur de chaîne 7 réglable, articulé à l'extrémité supérieure 8 de la partie 3 en forme de crochet et s'accouplant avec une chaîne 7 de traction qui est par exemple enroulée autour d'un tambour de treuil motorisé (non représenté). Selon un mode préférentiel de conception, le réducteur 5 est directement articulé sur l'extrémité supérieure 8 au moyen d'une liaison pivot 9.

Le réducteur 5 comprend un doigt de fermeture 10 de la partie 3 en forme de crochet. Le doigt 10 s'étend à l'extrémité basse du réducteur 5, en dessous de la liaison pivot 9, et à son extrémité 11 qui est en appui avec l'extrémité 12 de la partie 3 en forme de crochet, afin de fermer celle-ci et empêcher le décrochage de la charge qui est assemblée avec le crochet.

Le réducteur 5 permet de régler la longueur de la chaîne 7 pour la tendre au maximum avant de soulever la charge..Telle que représentée sur la figure 1, la chaîne 7 s'accouple avec le réducteur 5 par blocage d'un 13 de ses maillons dans ledit réducteur 5, lorsque la chaîne 7 est tendue. Le réducteur 5 comprend, selon un mode de conception préféré représenté sur les figures, une concavité 15 comprenant un orifice 17 dont les dimensions permettent le passage des maillons de la chaîne 7 au travers de celui-ci, puis le blocage d'un 13 desdits maillons positionné en appui sur le contour supérieur 19 de l'orifice 17, situé dans la concavité 15, une fois la longueur de la chaîne 7 réglée à son maximum, c'est-à-dire quasiment tendue et sur le point de soulever la charge.

Selon l'invention, le réducteur comprend des moyens d'obturation partielle 21 de l'orifice 17. Ces moyens d'obturation partielle 21 sont remarquablement disposés sur la face externe 23 du réducteur 5 et en appui sur celui-ci. Ils sont articulés sur la face externe 23 du réducteur 5 et peuvent être dégagés manuellement par une simple pression, par exemple avec le pouce ou l'index de la main qui saisit et maintient le crochet 1 ou le réducteur 5, ce qui permet ainsi de libérer l'orifice 17 et de régler la longueur de la chaîne 7.

Le crochet 1 selon l'invention est remarquable en ce que les moyens d'obturation 21 comprennent des moyens autobloquants 24. Les moyens autobloquants 24 se positionnent sur l'extrémité supérieure 8 de la partie 3 du crochet et viennent en butée sur celle-ci lorsque les moyens d'obturation 21 sont dégagés de la face externe 23 du réducteur 5, bloquant ainsi la liaison pivot 9, ce qui empêche la rotation du doigt 10 par rapport à la partie 3 et donc empêche l'ouverture du doigt 10 pour accrocher la charge sur ladite partie 3. Ces moyens autobloquants 24 maintiennent le doigt 10 en position verrouillée sur la partie 3 du crochet tant que les moyens d'obturation 21 sont dégagés de l'orifice 17 et qu'ils ne sont pas repositionnés en appui sur la face externe 23. Cette conception a pour avantage considérable d'obliger l'utilisateur à bien positionner les maillons de la chaîne 7 dans l'orifice 17 du réducteur 5 et à positionner convenablement les moyens d'obturation 21 en appui sur la face externe 23, avant de pouvoir ouvrir le crochet pour l'assembler avec la charge.

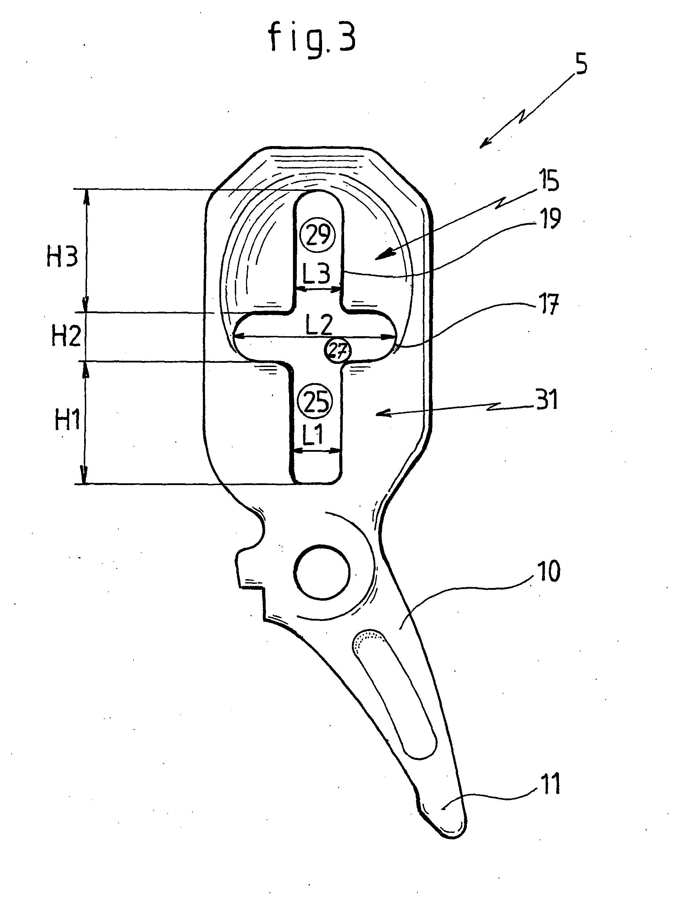

Tel que représenté en figure 3, le réducteur 5 comprend un orifice 17 dont la forme est, de préférence, celle d'une croix. La croix présente une extrémité basse 25 de largeur L1 et de hauteur H1, une partie centrale 27 de largeur L2 et de hauteur H2, une extrémité haute 29 de largeur L3 et de hauteur H3. les dimensions de L1, H1, L2, H2, L3 et H3 sont choisies en fonction de la taille des maillons de la chaîne 7 et permettent le passage desdits maillons au travers de l'orifice 17 lorsque celui est complètement ouvert. Selon un mode préféré de conception, l'extrémité basse 25 et éventuellement la partie centrale 27 sont fermées par les moyens d'obturation 21 lorsque ceux-ci sont en appui sur la face externe 23 du réducteur.

Le réducteur 5 est incurvé sur sa partie supérieure et plat sur sa partie inférieure. Ainsi, la face externe 23 du réducteur 5 est plane sur sa partie inférieure qui comprend, selon un mode préférentiel, au moins l'extrémité basse 25 et la partie centrale 27 de l'orifice en croix. La face interne 31, opposée à la face externe 23, comprend la concavité 15 sur sa partie supérieure, ladite concavité 15 comprenant l'extrémité haute 29 de l'orifice 17 en croix.

Selon un mode préférentiel et non limitatif, représenté sur les figures 1 et 2, les moyens d'obturation partielle 21 se composent d'un clapet de fermeture 33. Le clapet 33 appuie sur la partie basse de la face externe 23 qui est plane, ce qui permet de fermer l'orifice 17 sur son extrémité basse 25 et sur sa partie centrale 27, supprimant ainsi les mouvements du maillon 13 en position dans l'extrémité haute 29 de l'orifice 17, situé dans la concavité 15.

Le clapet de fermeture 33 est articulé sur la face externe 23 du réducteur 5. Cette articulation est mise en oeuvre au moyen d'une liaison pivot 35 réalisée sur la face externe 23. Pour cela, la partie basse sur la face externe 23 comprend un creux 36 dans lequel est mis en oeuvre ladite liaison pivot 35 et dans lequel se loge le clapet 33.

Le clapet est remarquable en ce qu'il comprend un doigt 37 de manipulation réalisé sur sa partie inférieure située en dessous de l'axe de la liaison pivot 35, qui permet de pivoter ledit clapet 33, en pressant sur le doigt 37, pour l'ouvrir et dégager l'orifice 17 afin de régler la longueur de la chaîne. Le doigt 37 comprend, de préférence, des stries 39 sur sa face supérieure, sur lesquelles peut s'agripper facilement le doigt de la main de l'utilisateur, et tout particulièrement son gant.

Selon un mode préférentiel de conception du crochet 1 selon l'invention, le doigt 37 du clapet 33 comprend les moyens autobloquants 24. Pour cela, les moyens autobloquants 24 sont constitués par un décrochement 41 réalisé à l'extrémité du doigt 37. Le décrochement 41 est de préférence de forme correspondante à celle de l'extrémité supérieure 8 de la partie 3 en forme de crochet. Ainsi, le décrochement 41 est par exemple de forme arrondie semblable à la forme arrondie 43 de l'extrémité supérieure 8 de la partie 3. Le décrochement 41 du doigt 37 épouse l'extrémité supérieure 8 et a donc son extrémité 45 qui est en butée sur la face 47 de ladite extrémité supérieure 8. L'extrémité 45 est maintenue en butée sur la face 47 tant que le clapet 33 est dégagé de l'orifice 17 et qu'il n'a pas retrouvé une position d'appui sur la face externe 23 du réducteur 5.

Le clapet comprend un ressort 49 de rappel qui permet le maintien en pression de la partie supérieure 51 dudit clapet 33 sur l'extrémité basse 25 et la partie centrale 27 de l'orifice 17, afin d'obturer en permanence ledit orifice 17. Le ressort 49 est de préférence un ressort à spirale positionné sur l'axe de la liaison pivot 35, dans le creux 36 sur la face externe 23. Ainsi, lorsque l'utilisateur appuie sur le doigt 37, le ressort est comprimé et le clapet s'ouvre pour libérer l'orifice et régler la chaîne, puis il se referme systématiquement sous l'action du ressort 49 lorsque l'utilisateur lâche le doigt 37.

La constante de raideur du ressort de rappel 49 est choisie pour assurer le maintien fermé du clapet 33 sur l'orifice 17 lorsque la chaîne 7 n'est pas tendue et que les maillons, en position dans le réducteur 5, exercent une pression sur la face interne 53 du clapet 33.

Ainsi le clapet 23 s'ouvre très facilement en saisissant le crochet 1, la prise en main dudit crochet permettant d'appuyer systématiquement sur le doigt 37.

Le crochet est fabriqué dans l'industrie métallurgique. Ses dimension sont adaptées à la charge à soulever et aux dimensions des maillons de la chaîne.

D'autres modes de réalisation du crochet de levage pourront être envisagés par l'Homme du Métier sans pour autant sortir du cadre de la présente invention.

## Revendications

1. - Crochet (1) de levage, utilisable pour lever des charges au moyen d'un dispositif de levage, comprenant une partie (3) en forme de crochet qui s'accroche sur la charge à soulever et un réducteur (5) de longueur de chaîne, ledit réducteur (5) étant solidaire de l'extrémité supérieure (9) du crochet et s'accouplant avec une chaîne (7) par blocage d'un (13) de ses maillons dans le réducteur (5), ledit réducteur (5) comprenant d'une part une concavité (15) et un orifice (17) dont les dimensions permettent le passage des maillons de la chaîne (7) au travers dudit orifice (17), puis le blocage d'un (13) desdits maillons positionné en appui sur le contour supérieur (19) de l'orifice (17), dans la concavité (15), lorsque ladite chaîne (3) est tendue, et d'autre part des moyens d'obturation partielle (21) de l'orifice (17) et une face externe (23), lesdits moyens d'obturation (21) étant situés en appui sur la face (23), lesdits moyens d'obturation (21) étant articulés pour être dégagés manuellement par simple pression pour permettre le réglage de la longueur de la chaîne (7), **caractérisé en ce que** le réducteur (5) comprend un doigt de fermeture (10) de la partie (3) en forme de crochet pour empêcher le décrochage de la charge, et **en ce que** les moyens d'obturation (21) comprennent des moyens autobloquants (24) qui maintiennent le doigt de fermeture (10) en position verrouillée sur la partie (3) du crochet tant que les moyens d'obturation (21) sont dégagés de l'orifice (17) et qu'ils ne sont pas repositionnés en appui sur la face externe (23).

2. - Crochet (1) de levage, selon la revendication précédente, **caractérisé en ce que** l'orifice (17) est en forme de croix qui présente une extrémité basse (25), une partie centrale (27) et une extrémité haute (29), et **en ce que** la partie basse de la face externe (23) du réducteur (5) est plane et comprend au moins l'extrémité basse (25) et la partie centrale (27) de l'orifice (17) en croix, lesquelles sont fermées par les moyens d' obturation (21).

3. - Crochet (1) de levage, selon la revendication précédente, **caractérisé en ce que** les moyens d'obturation (21) partielle se composent d'un clapet de fermeture (33) qui appuie sur la face externe (23) du réducteur (5) et ferme partiellement l'orifice (17).

4. - Crochet (1) de levage, selon la revendication précédente, **caractérisé en ce que** le clapet de fermeture (33) est articulé en liaison pivot (35) sur le réducteur (5).

5. - Crochet (1) de levage, selon la revendication précédente, **caractérisé en ce que** le clapet (33) comprend un doigt (37) permettant de pivoter ledit clapet (33) pour l'ouvrir et dégager l'orifice (17).

6. - Crochet (1) de levage selon la revendication précédente, **caractérisé en ce que** le doigt (37) comprend les moyens autobloquants (24), lesdits moyens autobloquants (24) étant constitués par un décrochement de forme correspondante à celle de l'extrémité supérieure de la partie (3) en forme de crochet.

7. - Crochet (1) de levage selon la revendication précédente, **caractérisé en ce que** le décrochement du doigt épouse l'extrémité supérieure de la partie (3) et la maintient en butée tant que le clapet (33) est dégagé de l'orifice (17).

8. - Crochet (1) de levage, selon la revendication précédente, **caractérisé en ce que** le clapet (33) comprend un ressort de rappel (49) qui maintient ledit clapet (33) en pression sur l'orifice (17) et obture celui-ci en permanence.

## Claims

1. Lifting hook (1), that can be used to lift loads using lifting gear, comprising a hook-shaped part (3) which hooks onto the load to be lifted and a chain length reducer (5), said reducer (5) being attached to the upper end (9) of the hook and coupling with a chain (7) by locking of one (13) of its links in the reducer (5), said reducer (5) comprising on the one hand a concavity (15) and an orifice (17) the dimensions of which allow the links of the chain (7) to pass through said orifice (17), then the locking of one (13) of said links positioned bearing against the upper contour (19) of the orifice (17), in the concavity (15), when said chain (3) is taught, and on the other hand means (21) for partially closing off the orifice (17) and an external face (23), said means (21) for closing off being located bearing against the face (23), said means (21) for closing being articulated to be disengaged manually by simply pressing them so as to allow the length of the chain (7) to be adjusted, **characterised in that** the reducer (5) comprises a closure finger (10) of the hook-shaped part (3) to prevent the load from being unhooked, and **in that** the means (21) for closing off include self-locking means (24) which maintain the closure finger (10) in the locked position on the part (3) of the hook as long as the means (21) for closing off are disengaged from the orifice (17) and they have not yet been returned to a position in which they bear against the external face (23).

2. Lifting hook (1), as claimed in the preceding claim, **characterised in that** the orifice (17) is in the form of a cross which has a low end (25), a central part (27) and a high end (29), and **in that** the low part of the external face (23) of the reducer (5) is plane and comprises at least the low end (25) and the central part (27) of the cross-shaped orifice (17), which are closed by the means (21) of closing off.

3. Lifting hook (1), as claimed in the preceding claim, **characterised in that** the means (21) for partially closing off are comprised of a check valve (33) which bears against the external face (23) of the reducer (5) and partially closes off the orifice (17).

4. Lifting hook (1), as claimed in the preceding claim, **characterised in that** the check valve (33) is articulated as a pivot link (35) on the reducer (5).

5. Lifting hook (1), as claimed in the preceding claim, **characterised in that** the valve (33) comprises a finger (37) allowing said valve (33) to pivot in order to open it and disengage the orifice (17).

6. Lifting hook (1), as claimed in the preceding claim, **characterised in that** the finger (37) comprises self-locking means (24), said self-blocking means (24) being comprised of a recess of a form corresponding to that of the upper end of the hook-shaped part (3).

7. Lifting hook (1), as claimed in the preceding claim, **characterised in that** the recess of the finger hugs the upper end of the part (3) and maintains it stopped as long as the valve (33) is disengaged from the orifice (17).

8. Lifting hook (1), as claimed in the preceding claim, **characterised in that** the valve (33) comprises a return spring (49) which maintains said valve (33) pressing against the orifice (17) and closing off the latter permanently.

## Patentansprüche

1. Hubhaken (1), der zum Heben von Lasten mithilfe einer Hubvorrichtung verwendet werden kann, mit einem hakenförmigen Abschnitt (3), der an die anzuhebende Last gehängt wird, und einem Kettenlängenreduzierer (5), wobei der besagte Reduzierer (5) aus einem Stück mit dem oberen Ende (9) des Hakens ist, und durch Blockieren eines (13) ihrer Kettenglieder im Reduzierer (5) mit der Kette (7) zusammengefügt wird, und der besagte Reduzierer (5) einerseits eine Vertiefung (15) und ein Loch (17) enthält, deren Abmessungen die Durchführung der Kettenglieder durch die besagte Öffnung (17) ermöglichen, sowie die Blockierung eines (13) der besagten Kettenglieder, das an der oberen Kontur (19) des Loches (17) anliegend, in der Vertiefung (15) positioniert wird, wenn die besagte Kette (3) gespannt ist, und andererseits Vorrichtungen zur teilweisen Abdeckung (21) des Loches (17) und eine Außenfläche (23), wobei die besagten Abdeckungsvorrichtungen (21) an der Fläche (23) anliegend angebracht sind, und die besagten Abdeckungsvorrichtungen (21) gelenkig ausgeführt sind, um von Hand durch einfache Druckanwendung ausgeschwenkt zu werden, um die Länge der Kette (7) einstellen zu können, **dadurch gekennzeichnet, dass** der Reduzierer (5) einen Stift (10) zum Verschließen des hakenförmigen Abschnitts (3) enthält, um zu vermeiden, dass sich die Lasten lösen, und **dadurch**, dass die Abdeckungsvorrichtungen (21) selbsthemmende Vorrichtungen (24) enthalten, die den Stift (10) zum Verschließen in der verriegelten Stellung auf dem hakenförmigen Abschnitt (3) halten, solange die Abdeckungsvorrichtungen (21) vom Loch (17) gelöst sind und nicht wieder auf Anschlag an der Außenfläche (23) anliegen.

2. Hubhaken (1) nach dem vorherigen Anspruch, **dadurch gekennzeichnet, dass** das Loch (17) die Form eines Kreuzes aufweist, das ein unteres Ende (25), einen mittleren Abschnitt (27) und ein oberes Ende (29) aufweist, und **dadurch**, dass der untere Abschnitt der Außenfläche (23) des Reduzierers (5) eben ist, und zumindest das untere Ende (25) und den mittleren Abschnitt (27) des kreuzförmigen Loches (17) umfasst, die durch die Abdeckungsvorrichtungen (21) geschlossen werden.

3. Hubhaken (1) nach dem vorherigen Anspruch, **dadurch gekennzeichnet, dass** die Vorrichtungen zur teilweisen Abdeckung (21) aus einer Verschlussklappe (33) bestehen, die an der Außenfläche (23) des Reduzierers (5) anliegt, und das Loch (17) teilweise verschließt.

4. Hubhaken (1) nach dem vorherigen Anspruch, **dadurch gekennzeichnet, dass** die Verschlussklappe (33) in Form einer Schwenkverbindung (35) beweglich auf dem Reduzierer (5) angebracht ist.

5. Hubhaken (1) nach dem vorherigen Anspruch, **dadurch gekennzeichnet, dass** die Klappe (33) einen Stift (37) enthält, um den die besagte Klappe (33) geschwenkt werden kann, um sie zu öffnen und das Loch (17) freizugeben.

6. Hubhaken (1) nach dem vorherigen Anspruch,
**dadurch gekennzeichnet, dass** der Stift (37) selbsthemmende Vorrichtungen (24) enthält, wobei die besagten selbsthemmende Vorrichtungen (24) durch einen Absatz in einer Form gebildet werden, die jener des oberen Endes des hakenförmigen Abschnitts (3) entspricht.

7. Hubhaken (1) nach dem vorherigen Anspruch, **dadurch gekennzeichnet, dass** der Absatz des Stiftes am oberen Ende des Abschnitts (3) anliegt, und diesen auf Anschlag hält, solange die Klappe (33) vom Loch (17) abgehoben ist.

8. Hubhaken (1) nach dem vorherigen Anspruch, **dadurch gekennzeichnet, dass** die Klappe (33) eine Rückholfeder (49) enthält, die die besagte Klappe (33) ans Loch (17) gedrückt, und dieses somit dauerhaft verschlossen hält.
